# EUROPEAN PATENT APPLICATION

(11) **EP 3 591 956 A1**
(43) Date of publication of application: **08.01.2020**
(21) Application number: 18465545.4
(22) Date of filing: 06.07.2018
(51) Int. Cl.: H04N 5/217, G06K 11/00, G06K 9/00, H04N 17/00

(54) **DEVICE FOR DETERMINING CAMERA BLOCKAGE**

(71) Applicant: Continental Automotive GmbH, 30165 Hannover (DE)
(72) Inventor: Dumitrescu, Florin, 300232 Timisoara (RO)
(74) Representative: Reuter, Andreas

(57) **Abstract**

The present invention relates to a device (10) for determining camera blockage. It is described to provide (210) a processing unit with an acquired image taken by a camera of an extra-vehicle scene. The processing unit implements (220) a processing protocol to process the acquired image to generate a processed acquired image. The processing unit determines (230) an indication of camera blockage comprising utilization of a classifier to determine a classification of the processed acquired image. The classifier has been trained on the basis of a plurality of processed training images of a plurality of extra vehicle scenes. Each processed training image was generated through utilization of the processing protocol on a corresponding training image. An output unit outputs (240) the indication of camera blockage.

## Description

### FIELD OF THE INVENTION

The present invention relates to a device for determining camera blockage, to a vehicle utilizing a device for determining camera blockage, and to a method for determining camera blockage, as well as to a computer program element and a computer readable medium.

### BACKGROUND OF THE INVENTION

Camera Blockage relates to utilization of an algorithm for determining the overall state of a sensor (for example a camera used as part of an advanced driver assistance system). This is to determine if the sensor is affected by weather, such as rain, fog, sun glare or the windshield in front of it, and possibly whether the sensor is affected by snow, condensation, ice, dirt etc. In other words, whether there is something blocking or obscuring the camera's optical path. Knowing the state of the sensor, this information can be used by other algorithms in order that they do not trigger further actions incorrectly, like starting wipers if rain is detected.

A camera blockage detection algorithm is based on Haar wavelet transform applied on imaging and counting the various types of edges, like Dirac-, step- or roof-structure types for determining a degree of image blur. It is assumed that a clear image has sharp edges (transitions), whilst an image that is affected by blur loses sharpness of edges. Information on the wavelet transform can be found in the paper by Tong, Li, Zhang and Zhang: Blur detection for digital images using wavelet transform, Multimedia and expo, 2004, ICME '04.

However, the detection of glare, fog, rain etc. requires operation of a dedicated "mini-algorithm" for each detection. The conditions that determine a type of blockage are described by setting well-chosen thresholds in the different types of various edge-types described above, which give a measure for the degree of sharpness, or its lack of sharpness - i.e., blur. Also, processing of the image is done on sub-regions of the image at a time.

There is a need to provide an improved technique for determining blockage of a camera for a vehicle.

### SUMMARY OF THE INVENTION

The object of the present invention is solved with the subject matter of the independent claims, wherein further embodiments are incorporated in the dependent claims. It should be noted that the following described aspects and examples of the invention apply also for the device for determining camera blockage, the vehicle utilizing such a device, the method for determining camera blockage, and for the computer program element and computer readable medium.

In a first aspect, there is provided a device for determining camera blockage, comprising:
- an input unit;
- a processing unit; and
- an output unit.

The input unit is configured to provide the processing unit with an acquired image taken by a camera of an extra-vehicle scene. The processing unit is configured to implement a processing protocol to process the acquired image to generate a processed acquired image. The processing unit is configured to determine an indication of camera blockage comprising utilization of a classifier to determine a classification of the processed acquired image. The classifier has been trained on the basis of a plurality of processed training images of a plurality of extra vehicle scenes. Each processed training image was generated through utilization of the processing protocol on a corresponding training image. The output unit is configured to output the indication of camera blockage.

Thus, a whole image is treated as an object, and object classification algorithms are used for object classification without having to consider sub-regions of the image or use separate mini-algorithms to detect glare, fog, rain or other blockage events.

In other words, a machine learning approach for camera blockage is utilized that can make use of available methods of object detection, but applied to a new object - the whole image. More information on specific classifiers that can be applied can be found for example in the book by S. Prince "Computer Vision: Models, Learning, and Inference", Cambridge University Press.

To put this another way, an image does not need to be scanned in order to find an object of interest, and then classify it, because the image itself is the object, which only needs to be classified as blocked or not. This is enabled, because the blockage type is classified for the image itself, and not for parts of it or objects belonging to it.

By training the classifier using the same processing protocol that is used to process an acquired image, for which an indication of blockage is to be determined, means that a uniform approach is provided and there is in effect no difference whether rain, fog, or sun glare is being detected. The same local features are used to classify various causes of blockage, with different label types being used for training images in order that the classifier can return the type of blockage event for an acquired image.

In an example, implementation of the processing protocol to generate the processed acquired image comprises generation of an image that has a lower resolution than the acquired image.

In an example, generation of the image that has a lower resolution that the acquired image comprises subsampling.

In an example, generation of the image that has a lower resolution that the acquired image comprises blurring and subsampling.

In an example, generation of the image that has a lower resolution that the acquired image comprises averaging.

In an example, implementation of the processing protocol to generate the processed acquired image comprises generation of an image that has fewer pixels than the acquired image.

In an example, the processing protocol is iterated to generate the processed acquired image.

In an example, implementation of the processing protocol to generate the processed acquired image comprises a division of an image into a grid of cells, and comprises a determination of local features for each cell of the grid of cells. The classifier is configured to determine the classification of the processed acquired image on the basis of the local features for each cell of the grid of cells.

In other words, a machine learning approach to detecting camera blockage is provided. Object detection algorithms perform local feature extraction, where features can include histogram-of-gradients (HOG) and local binary patterns (LBP). Based on such features, a classification algorithm can be invoked to determine if there is camera blockage and if there is camera blockage to determine the type of blockage.

In an example, a histogram of gradients algorithm is used to determine the local features.

In an example, a local-binary-patterns algorithm is used to determine the local features.

In an example, the classifier is a machine learning algorithm.

In an example, the machine learning algorithm is a neural network.

In a second aspect, there is provided a vehicle, comprising:
- at least one camera;
- a device (10) for determining camera blockage according to the first aspect.

The at least one camera is configured to capture the acquired image.

In a third aspect, there is provided a method for determining camera blockage, comprising:
a) providing a processing unit with an acquired image taken by a camera of an extra-vehicle scene;
b) implementing by the processing unit a processing protocol to process the acquired image to generate a processed acquired image;
c) determining by the processing unit an indication of camera blockage comprising utilization of a classifier to determine a classification of the processed acquired image; wherein, the classifier has been trained on the basis of a plurality of processed training images of a plurality of extra vehicle scenes, wherein each processed training image was generated through utilization of the processing protocol on a corresponding training image;
d) outputting (240) by an output unit the indication of camera blockage.

In other words, a uniform approach is provided for the detection of camera blockage, where in effect there is no difference whether rain, fog, sun glare or other types of blockage are to be detected. The same local features are used to classify the various causes for blockage. What varies is the label type used with training data of different blockage types, whilst the classification methodology remains the same.

This approach to camera blockage detection is in accord with other algorithms used as part of an advanced drover assistance system (ADAS).

According to another aspect, there is provided a computer program element controlling apparatus as previously described which, when the computer program element is executed by a processing unit, is adapted to perform the method steps as previously described.

According to another aspect, there is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a device for determining camera blockage;
Fig. 2 shows a schematic set up of an example of a vehicle having a device for determining camera blockage;
Fig. 3 shows a method for determining camera blockage; and
Fig. 4 shows an exemplar image that has been classified as soft glaring.

### DETAILED DESCRIPTION OF EMBODIMENTS

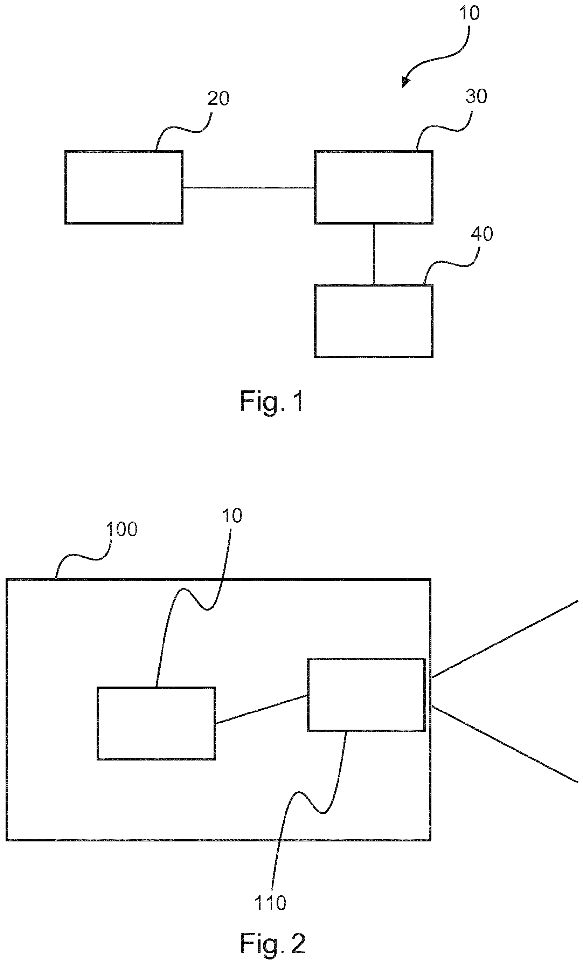

Fig. 1 shows an example of a device 10 for determining camera blockage. The device 10 comprises an input unit 20, a processing unit 30, and an output unit 40. The input unit is configured to provide the processing unit with an acquired image taken by a camera of an extra-vehicle scene. The processing unit is configured to implement a processing protocol to process the acquired image to generate a processed acquired image. The processing unit is configured also to determine an indication of camera blockage comprising utilization of a classifier to determine a classification of the processed acquired image. The classifier has been trained on the basis of a plurality of processed training images of a plurality of extra vehicle scenes. Each processed training image was generated through utilization of the processing protocol on a corresponding training image. The output unit is configured to output the indication of camera blockage.

According to an example, implementation of the processing protocol to generate the processed acquired image comprises generation of an image that has a lower resolution than the acquired image.

According to an example, generation of the image that has a lower resolution that the acquired image comprises subsampling.

According to an example, generation of the image that has a lower resolution that the acquired image comprises blurring and subsampling.

According to an example, generation of the image that has a lower resolution that the acquired image comprises averaging.

According to an example, implementation of the processing protocol to generate the processed acquired image comprises generation of an image that has fewer pixels than the acquired image.

According to an example, the processing protocol is iterated to generate the processed acquired image.

According to an example, implementation of the processing protocol to generate the processed acquired image comprises a division of an image into a grid of cells, and comprises a determination of local features for each cell of the grid of cells. The classifier is configured to determine the classification of the processed acquired image on the basis of the local features for each cell of the grid of cells.

According to an example, a histogram of gradients algorithm is used to determine the local features.

According to an example, a local-binary-patterns algorithm is used to determine the local features.

According to an example, the classifier is a machine learning algorithm.

According to an example, the machine learning algorithm is a neural network.

Fig. 2 shows an example of a vehicle 100. The vehicle 100 comprises at least one camera 110, and a device 10 for determining camera blockage as described above with respect to Fig. 1. The at least one camera is configured to capture the acquired image.

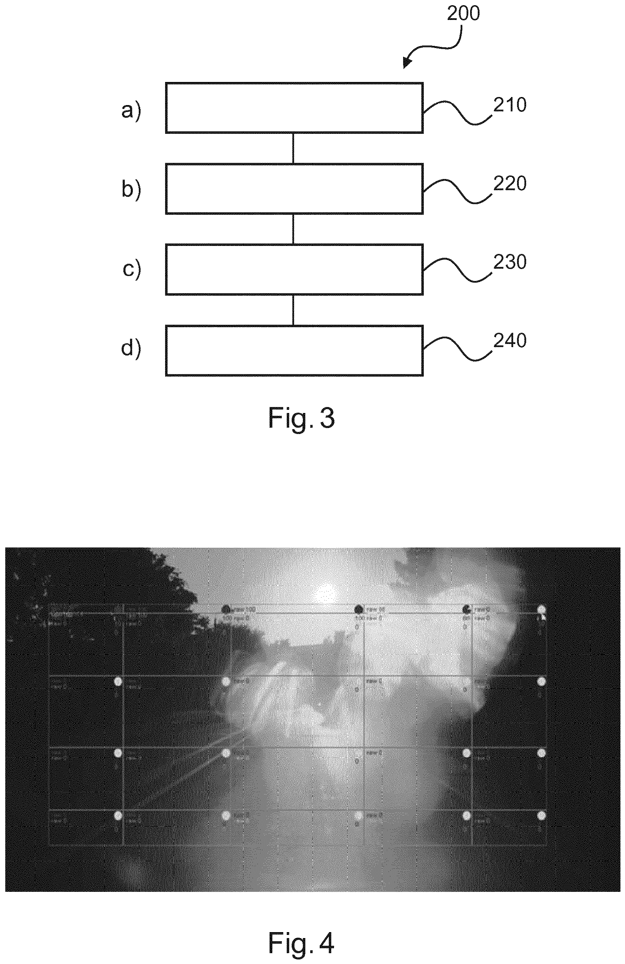

Fig. 3 shows a method 200 for determining camera blockage in its basic steps. The method 200 comprises:
in a providing step 210, also referred to as step a), providing a processing unit with an acquired image taken by a camera of an extra-vehicle scene;
in an implementing step 220, also referred to as step b), implementing by the processing unit a processing protocol to process the acquired image to generate a processed acquired image;
in a determining step 230, also referred to as step c), determining by the processing unit an indication of camera blockage comprising utilization of a classifier to determine a classification of the processed acquired image; wherein, the classifier has been trained on the basis of a plurality of processed training images of a plurality of extra vehicle scenes, wherein each processed training image was generated through utilization of the processing protocol on a corresponding training image;
in an outputting step 240, also referred to as step d), outputting by an output unit the indication of camera blockage.

In an example, step b) comprises step b1) generating an image that has a lower resolution than the acquired image.

In an example, step b1) comprises subsampling.

In an example, step b1) comprises blurring and subsampling.

In an example, step b1) comprises averaging.

In an example, step b) comprises generating an image that has fewer pixels than the acquired image.

In an example, step b) comprises iterative processing.

In an example, step b comprises step b2) dividing an image into a grid of cells, and comprises step b2a) determining local features for each cell of the grid of cells, and wherein step c) comprises classifying the processed acquired image on the basis of the local features for each cell of the grid of cells.

In an example, step b2a) comprises utilizing a histogram of gradients algorithm.

In an example, step b2a) comprises utilizing a local-binary-patterns algorithm.

In an example, the classifier is a machine learning algorithm.

In an example, the machine learning algorithm is a neural network.

The device and method are now described in further detail with respect to Fig. 4.

Fig. 4 shows an image acquired by a vehicle's camera. The image has been classified as soft glaring, and if other ADAS algorithms were not informed that there was a soft glare situation these algorithms can be negatively impacted. Lane markers are barely recognizable, and the shapeless contour created on the image is not identifiable by any normal shape-oriented algorithm. However, enough features are generated for the present methodology to classify this as sift glare, as now discussed with reference to a detailed example.

The image has a resolution of 1024 by 512. The image is transformed into a pyramid level 4 image, having a resolution of 64 by 32. A pyramid level 4 image is a low resolution image. The original image can be considered to be a level 0 image, and this can be transformed to a level 1 image by subsampling, blurring and sub-sampling or averaging any 2x2 cell in the level 0 image. Thus, if the level 0 image has a size MxN the level 1 image has a size (M/2)x/N/2). The same procedure is carried out to transform the level 1 image to a level 2 image, that is transformed to a level 3 image, that is then transformed to a level 4 image, having an image size (M/16)x(N/16) with a resolution of 64x32. Images that are used to train the classifier are also transformed into level 4 images - however the image being analysed could be a level 3 image or a level 5 image, but if so the images used for training the classifier would also be similarly level 3 images or level 5 images.

Continuing with the acquired image shown in Fig. 4, the level 4 image is divided into a grid of 8x8 size cells, there then being 8x4=32 cells. For a given cell, and for each pixel, the angle and magnitude of the gradient is calculated. The magnitude is placed in a bin of angle values, adding to a current magnitude sum value in the corresponding bin. These are the Histogram-of-Gradient (HOG) features for a given cell: an angle based 8-bin with cumulated magnitude values in those directions. Similarly, for each pixel the 8-neighborhood pixels are looked at and represented as a LBP feature on a 4-bit state. This can be projected into a 3-bit state. For a cell we count the number of occurrences of an LBP state as generated by the pixels in that cell are counted. This builds LBP features. So each cell gives rise to 8 HOG features and 8 LBP features. These are then normalized before feeding them into a classifier. The classifier is a classification algorithm trained based on labeled (ground truth) images, processed in the same way as the acquired image.

In this way, the image does not need to be scanned to find the object of interest, because this is the whole image itself, which only needs to be classified as blocked or not, and can also be classified as to the type of blockage. Thus traditionally an image has been processed to answer the following question relating to blockage: "where" and "what", but the present methodology only requires that the "what" be determined, leading to a substantial gain in computational power. Furthermore, training of the classifier is simplified. Classifier are trained using ground truth information, where traditionally a human will determine for example where pedestrians are located in the image with a box type label surrounding the pedestrians then indicating that this area of the image relates to pedestrians. Similarly, glare situations have been similarly provided with ground truth information on the "where" and "what" box type labelling being provided. However, in the present situation because the whole image is the object, the images themselves only need to be annotated with a corresponding blockage conditions, such as dirt, glare, rain et cetera without having to draw boxes around objects of interest. This is because, as discussed above the object of interest in the present case is the whole image, or rather the high pyramid level of the image, enabled because the present methodology centres on detecting global image attributes and not in detecting specific local details of the image. Thus for example, for an image affected by rain drops each particular droplet grid shape is not identified, rather features that are generated by such raindrops are identified to recognise that it is raining, in analogy to identifying a bird by its mere tail, beak other features.

As the present algorithm is in consensus with (in accord with) the development of algorithms that are machine learning based, it allows reusability of the features used in blockage classification for other types of detections, like road, vehicles et cetera. This approach therefore moves in the direction of a deep learning approach to sensor-based detections, which attempts as well to place various algorithms on equal footing, processing the same input and customising it for various purposes. Not least, the blockage detection can serve as a test case for the more general problem of determining global attributes of an image. Such attributes can refer to image luminosity, white balancing et cetera or even environment settings. The methodology can also be used in determining the state of a sensor based on the type input receives, and can be a first test that a signal is correctly received, therefore can serve as a signature or protocol test.

As discussed above, classification algorithms that can be used can be classical machine learning classification algorithms as described for example in the book by S. Prince "Computer Vision: Models, Learning, and Inference", Cambridge University Press. A (multiclass) support vector machine, or (multiclass) logistic regression could also be used, for example as described in the web page http://cs231n.sithub.io/linear-classify/. However, rather than passing an image through the classifiier in a specific example the HOG- and LBP-features are used as input). Further, an (Adaboost) decision tree (as proposed by Viola-Jones in "Robust Real-Time Face Detection") could be utilized.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for determining camera blockage, comprising:
- an input unit (20);
- a processing unit (30); and
- an output unit (40);
wherein, the input unit is configured to provide the processing unit with an acquired image taken by a camera of an extra-vehicle scene;
wherein, the processing unit is configured to implement a processing protocol to process the acquired image to generate a processed acquired image;
wherein, the processing unit is configured to determine an indication of camera blockage comprising utilization of a classifier to determine a classification of the processed acquired image;
wherein, the classifier has been trained on the basis of a plurality of processed training images of a plurality of extra vehicle scenes, wherein each processed training image was generated through utilization of the processing protocol on a corresponding training image; and
wherein, the output unit is configured to output the indication of camera blockage.

2. Device according to claim 1, wherein implementation of the processing protocol to generate the processed acquired image comprises generation of an image that has a lower resolution than the acquired image.

3. Device according to claim 2, wherein generation of the image that has a lower resolution that the acquired image comprises subsampling.

4. Device according to claim 2, wherein generation of the image that has a lower resolution that the acquired image comprises blurring and subsampling.

5. Device according to claim 2, wherein generation of the image that has a lower resolution that the acquired image comprises averaging.

6. Device according to any of claims 1-5, wherein implementation of the processing protocol to generate the processed acquired image comprises generation of an image that has fewer pixels than the acquired image.

7. Device according to any of claims 1-6, wherein the processing protocol is iterated to generate the processed acquired image.

8. Device according to any of claims 1-7, wherein implementation of the processing protocol to generate the processed acquired image comprises a division of an image into a grid of cells, and comprises a determination of local features for each cell of the grid of cells, and wherein the classifier is configured to determine the classification of the processed acquired image on the basis of the local features for each cell of the grid of cells.

9. Device according to claim 8, wherein a histogram of gradients algorithm is used to determine the local features.

10. Device according to claim 8, wherein a local-binary-patterns algorithm is used to determine the local features.

11. Device according to any of claims 1-10, wherein the classifier is a machine learning algorithm.

12. Device according to claim 11, wherein the machine learning algorithm is a neural network.

13. A vehicle (100), comprising:
- at least one camera (110);
- a device (10) for determining camera blockage according to any of claims 1-12; and
wherein, the at least one camera is configured to capture the acquired image.

14. A method (200) for determining camera blockage, comprising:
a) providing (210) a processing unit with an acquired image taken by a camera of an extra-vehicle scene;
b) implementing (220) by the processing unit a processing protocol to process the acquired image to generate a processed acquired image;
c) determining (230) by the processing unit an indication of camera blockage comprising utilization of a classifier to determine a classification of the processed acquired image; wherein, the classifier has been trained on the basis of a plurality of processed training images of a plurality of extra vehicle scenes, wherein each processed training image was generated through utilization of the processing protocol on a corresponding training image;
d) outputting (240) by an output unit the indication of camera blockage.

15. A computer program element for controlling a device according to any one of claims 1 to 12, which when executed by a processor is configured to carry out the method of claim 14.
